# EUROPÄISCHE PATENTSCHRIFT

(11) **EP 3 611 012 B1**
(45) Veröffentlichungstag und Bekanntmachung des Hinweises auf die Patenterteilung: **20.05.2026**
(21) Anmeldenummer: 19191402.7
(22) Anmeldetag: 13.08.2019
(51) Int. Cl.: B29C 70/44, B29C 70/34, B29D 99/00, B29C 43/36

(54) **VORRICHTUNG UND VERFAHREN ZUM HERSTELLEN EINES BAUTEILS**
DEVICE AND METHOD FOR PRODUCING A COMPONENT
DISPOSITIF ET PROCÉDÉ DE FABRICATION D'UN COMPOSANT

(30) Priorität: 16.08.2018 DE 102018119968
(43) Veröffentlichungstag der Anmeldung: 19.02.2020
(73) Patentinhaber: Airbus Operations GmbH, 21129 Hamburg (DE)
(72) Erfinder: Seegel, Hauke, 21129 Hamburg (DE)
(74) Vertreter: Schornack, Oliver

(56) Entgegenhaltungen:
- EP-A1- 2 902 176
- JP-A- 2015 229 304
- US-A1- 2010 196 637

## Beschreibung

Die Erfindung betrifft eine Vorrichtung und ein Verfahren zum Herstellen eines Bauteils. Insbesondere betrifft die Erfindung eine Vorrichtung und ein Verfahren zum Herstellen des Bauteils mittels zweier Formelemente (auch als "Tooling" bezeichnet) und einem in einem Hohlraum eines der Formelemente angeordneten Schlauchs.

Zum Beispiel betrifft die US 2010/0196637 A1 die Herstellung hohler Bauteile. Hierfür wird zwischen zwei Formhälften mindestens ein Halbzeug ("Prepreg") eingebracht, in dessen Innerem sich mindestens ein Formschlauch befindet. Durch Verwendung einer Vakuumhülle oder Vakuumsack um die Formhälften und Einbringen eines höheren Gasdrucks in die Formschläuche lässt sich das Halbzeug an die Innenseite der Formhälften pressen.

Bei der Herstellung von Bauteilen, insbesondere Harz enthaltende und/oder faserverstärkte Bauteile, ist jedoch die Bildung einer Stirnseite schwierig. Unter Stirnseite wird hier eine schmale in einer Richtung des Bauteils verlaufende Seite verstanden, die zwischen zwei großflächigeren (eine größere Fläche als die Stirnseite aufweisenden) Seiten angeordnet ist. Durch diese spezielle Form kann es beim Aushärten des Harzes oder bereits im geformten, unfertigen Zustand zu Schäden an der Stirnseite kommen.

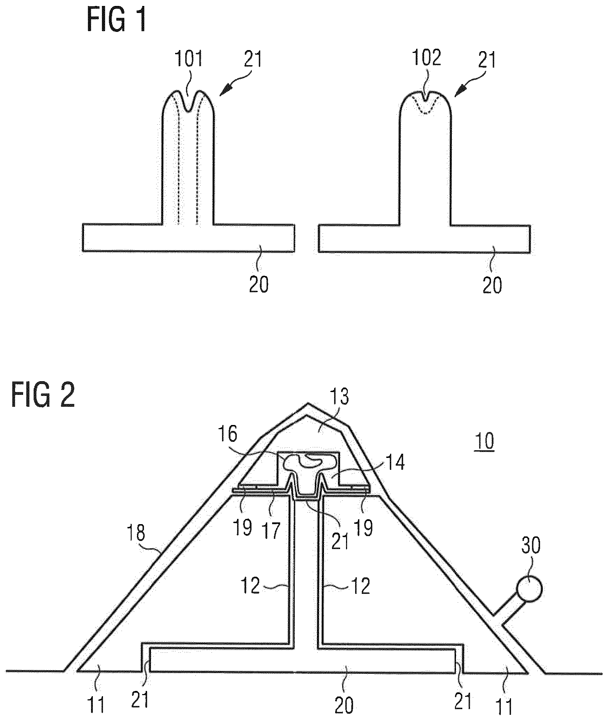

Beispielsweise ist in Figur 1 ein Bauelement 20 dargestellt, das einen Abschnitt mit einer Stirnseite 21 aufweist. An der in der Figur 1 oben dargestellten Stirnseite 21 kann es beim Aushärten des Harzes zu Rissbildungen kommen oder es können Lufteinschlüsse 101 entstehen, die nach dem Aushärten bestehen bleiben, wie dies links in Figur 1 dargestellt ist.

Ebenso kann es bei faserverstärkten Bauteilen 20 (Kompositelementen) zu einem ähnlich unerwünschten Effekt kommen. Hierbei können nach dem Einbringen der Fasern in die Form (oder beim Einbringen eines vorgefertigten Bauteils mit faserverstärkter Einlage (pre-preg) in die Form) die Fasern durch eine die Stirnseite 21 bildende Form oder Formabschnitt gestaucht oder aus ihrer Lage zur Seite gedrückt werden. Beispielsweise können verschiedene Fasern oder Faserlagen wie beim Delaminieren auseinandergedrückt werden. Dies ist durch die in Figur 1 gestrichelt dargestellten Fasern dargestellt. Im später fertigen (ausgehärteten) Bauteil 20 kann dabei eine unerwünschte Lücke 101 in der Stirnseite 21 entstehen.

Ein weiterer nachteiliger Effekt, auch als Bucheffekt bezeichnet, entsteht bei der Herstellung von faserverstärkten, gekrümmten Bauteilen. Dabei werden verschiedene Lagen aufeinanderliegender Fasern durch die Krümmung gegeneinander verschoben, ähnlich wie die Seiten eines Buches, sodass an einem Ende (einer Stirnseite des Bauteils) die Faserlagen in unterschiedlichen Positionen enden.

Somit kann der Bucheffekt auch dazu führen, dass aufgrund der unterschiedlich langen Faserlagen eine Lücke ähnlich der Lücke 101 entsteht, die zumindest teilweise durch zusätzliches Harz 102 aufgefüllt wird, wie dies rechts in Figur 1 dargestellt ist. Es wurde zwar versucht, stirnseitig einen gewissen Mehrraum in der Form vorzusehen und mehr Harz als notwendig in die Form einzubringen, wobei das überschüssige ausgehärtete Harz 102 später entfernt werden muss, um das Bauteil in die gewünschte Form (Größe) zu bringen. Andernfalls müssten alle Faserlagen an einem Ende (der zukünftigen Stirnseite des Bauteils) zunächst auf gleiche Länge abgeschnitten werden. In beiden Fällen ist ein zusätzlicher Arbeitsschritt notwendig.

Der Erfindung liegt die Aufgabe zugrunde, eine Vorrichtung und ein Verfahren zum Herstellen eines Bauteils bereitzustellen, mit der/dem das Bauteil gleichmäßiger, zuverlässiger und auch schneller hergestellt werden kann.

Diese Aufgabe wird durch eine Vorrichtung mit den Merkmalen des Anspruchs 1 und durch ein Verfahren mit den Merkmalen des Anspruchs 9 gelöst.

Gemäß einem ersten Aspekt zum besseren Verständnis der vorliegenden Offenbarung umfasst eine Vorrichtung zum Herstellen eines Bauteils ein erstes Formelement und ein zweites Formelement. Dabei kann das erste Formelement an einer Seite dazu ausgebildet sein, zumindest einen Abschnitt des herzustellenden Bauteils mit Ausnahme einer äußeren Stirnseite des herzustellenden Bauteils zu formen, und das zweites Formelement kann einen Hohlraum aufweisen und dazu eingerichtet sein, auf dem ersten Formelement so angeordnet zu werden, dass der Hohlraum die Stirnseite des herzustellenden Bauteils überspannt.

Bei dem herzustellenden Bauteil kann es sich um ein Bauteil aus auszuhärtendem Harz handeln. Alternativ oder zusätzlich kann das herzustellende Bauteil ein faserverstärktes Bauteil und/oder faserverstärktes Verbundmaterialbauteil sein. Die Seite des herzustellenden Bauteils muss nicht in den Hohlraum des zweiten Formelements hineinragen (nach endgültiger Aushärtung des Bauteils). Vielmehr kann die Seite auch in einem durch das erste Formelement definierten Bereich gebildet werden, der mit dem Hohlraum des zweiten Formelements korrespondiert.

Der Hohlraum des zweiten Formelements dient somit der Auflassung des Bereichs, in dem die Seite gebildet werden soll. Die Seite des herzustellenden Bauteils wird anstatt durch ein starres Formelement durch andere Komponenten gebildet. So kann ein aufblasbarer Schlauch in dem Hohlraum angeordnet sein. Der Hohlraum dient daher nicht der Aufnahme von Material zum Herstellen des Bauteils, wie bei üblichen Formteilen, sondern dient vielmehr einer flexiblen Herstellung der Seite des Bauteils ohne feste formgebende Formteile.

Die Vorrichtung kann ferner eine Abdeckung aufweisen, die das erste Formelement und das zweite Formelement bedeckt und gegenüber der umgebenden Atmosphäre abdichtet. Dabei kann die Abdeckung das erste und zweite Formelement vollständig umschließen. Alternativ oder zusätzlich kann das erste und/oder zweite Formelements auch auf einer Arbeitsfläche oder anderem Untergrund gelagert sein, wobei die Abdeckung an der Arbeitsfläche oder dem Untergrund fluiddicht befestigt ist.

Das Innere des aufblasbaren Schlauchs ist dabei mit der umgebenden Atmosphäre fluidisch gekoppelt. Mit anderen Worten ist das Innere des aufblasbaren Schlauchs nicht durch die Abdeckung gegenüber der umgebenden Atmosphäre abgedichtet. Beispielsweise kann die Abdeckung eine Öffnung aufweisen, während der Schlauch um die Öffnung herum mit der Abdichtung fluiddicht verbunden ist. Alternativ oder zusätzlich kann die Abdeckung an der Öffnung schlauchförmig ausgebildet sein, wobei der schlauchförmige Abdeckungsabschnitt mit dem Schlauch zusammengeschlossen ist oder darin übergeht.

Bei der Seite des herzustellenden Bauteils handelt es sich um eine Stirnseite des herzustellenden Bauteils. Dabei ist das erste Formelement an einer Seite dazu ausgebildet, zumindest einen Abschnitt des herzustellenden Bauteils mit Ausnahme der Stirnseite zu formen. Ferner korrespondiert die Lage des Hohlraums mit der Stirnseite des herzustellenden Bauteils, überspannt diese also.

In einer weiteren Ausgestaltungsvariante kann die Vorrichtung eine semi-permeable Membran umfassen, die zwischen dem aufblasbaren Schlauch und der (zukünftigen) (Stirn-) Seite des herzustellenden Bauteils angeordnet ist. Die semi-permeable Membran verhindert somit ein Berühren des aufblasbaren Schlauchs mit dem herzustellenden Bauteil, beispielsweise dessen Stirnseite. Auf der anderen Seite schützt die semi-permeable Membran den aufblasbaren Schlauch vor dem Material des herzustellenden Bauteils, sodass der Schlauch für mehrere Bauteile wiederverwendet werden kann, ohne gereinigt werden zu müssen. Die semi-permeable Membran erlaubt ein Entweichen von Gasen, insbesondere Luft, ist aber für Stoffe größerer Viskosität, wie beispielsweise Harz, undurchlässig.

Zum besseren Abführen von Gas, insbesondere Luft, kann eine Entlüftungsschicht, ein sogenannter Breather, zwischen semi-permeable Membran und Schlauch eingelegt werden.

In einer Weiterentwicklung kann die semi-permeable Membran zwischen dem ersten Formelement und dem zweiten Formelement angeordnet sein und die Seite des herzustellenden Bauteils überspannen. Mit anderen Worten überspannt die semi-permeable Membran einen Hohlraum oder eine Öffnung des ersten Formelements, in dem/der das herzustellende Bauteil geformt wird. Beispielsweise kann die semi-permeable Membran zwischen dem ersten und zweiten Formelement eingeklemmt sein, sodass keine gesonderte Halterung für die Membran notwendig ist. Aufgrund der Semipermeabilität der Membran kann somit der Hohlraum oder die Öffnung vollständig zur Formung des herzustellenden Bauteils bis zu der Membran genutzt werden, wobei die Membran Harz zurückhält und somit die Seite des herzustellenden Bauteils formt.

Alternativ oder zusätzlich kann die Vorrichtung ein Dichtelement umfassen, das zwischen der semi-permeablen Membran und dem ersten Formelement und/oder zwischen der semi-permeablen Membran und dem zweiten Formelement angeordnet ist. Auch können zwei Dichtelemente auf beiden Seiten der semi-permeablen Membran angeordnet sein, wobei eines der Dichtelemente dem ersten Formelement zugewandt ist, während das andere der Dichtelemente dem zweiten Formelement zugewandt ist. In jedem Fall wird eine Abdichtung gegenüber austretendem Harz zwischen den beiden Formelementen erzielt.

In einer weiteren Ausgestaltungsvariante kann die semi-permeable Membran schlauchförmig ausgebildet sein und den aufblasbaren Schlauch umschließen. Auch hier wird der aufblasbare Schlauch vor Harz des herzustellenden Bauteils geschützt. Beispielsweise kann die semi-permeable Membran über den Schlauch gezogen werden. Alternativ kann der Schlauch auch mit einem die semi-permeable Membran formenden Material beschichtet werden. Auch hier kann zum besseren Entlüften ein Breather zwischen Membran und Schlauch vorgesehen sein.

Alternativ oder zusätzlich kann die semi-permeable Membran zumindest abschnittsweise vorgeformt sein. Beispielweise kann die semi-permeable Membran aus einem gegenüber Harz formstabilen Material bestehen. Ferner kann der vorgeformte Abschnitt bzw. die gesamte semi-permeable Membran dazu eingerichtet sein, die Seite des herzustellenden Bauteils zu formen. Mit anderen Worten hält die semi-permeable Membran das Harz des herzustellenden Bauteils in Form, bis dieses aushärtet.

In einer weiteren Ausgestaltungsvariante umfasst die Vorrichtung eine Vakuumquelle, die dazu eingerichtet ist, ein Vakuum in dem von der Abdeckung abgedichteten Bereich, in dem sich das erste Formelement und das zweite Formelement befinden, aufzubringen. Dadurch wird Luft aus einem von dem ersten Formelement und dem zweiten Formelement definierten Raum, in dem das Bauteil hergestellt wird, entfernt.

Dies erleichtert den Eintrag von auszuhärtendem Harz oder anderem Material, und vermindert die Bildung von Gasblasen (Luftblasen) in dem auszuhärtenden Harz/Material. Ferner wird die Abdeckung auf das erste und zweite Formelement gedrückt, wodurch das herzustellende Bauteil formsicher hergestellt werden kann.

Da das Innere des aufblasbaren Schlauchs mit der umgebenden Atmosphäre fluidisch gekoppelt ist, dehnt sich der Schlauch durch Aufbringen des Vakuums in dem Hohlraum des zweiten Formelements aus. Der Schlauch wird sozusagen indirekt aufgeblasen. Dadurch bildet der Schlauch ein die (Stirn-) Seite des Bauteils formendes Formelement. Insbesondere bei Anordnung einer vorgeformten semi-permeablen Membran kann der Schlauch diese von der Hohlraumseite aus stützen, sodass die semi-permeable Membran ein formstabiles Formelement für die Stirnseite des herzustellenden Bauteils bildet. Der aufblasbare Schlauch bedingt dabei eine homogene Druckverteilung auf die semi-permeable Membran, wodurch eine homogene Seite (genauer gesagt die Fläche der Seite) des herzustellenden Bauteils hergestellt wird.

Für den Fall, dass bei der Herstellung des Bauteils Harz mit Druck in das erste Formelement injiziert wird, kann das Innere des aufblasbaren Schlauchs auch mit Druck beaufschlagt werden. Beispielsweise kann Luft mittels einer Pumpe in den Schlauch gedrückt werden, um dem Injektionsdruck entgegenzuwirken. Dabei sollte der Druck in dem Schlauch immer etwas größer sein, als der Injektionsdruck.

In einer weiteren Ausgestaltungsvariante kann das erste Formelement zweiteilig ausgebildet sein. Zwischen den beiden Teilen des Formelements ist ein Zwischenraum vorgesehen, in dem das herzustellende Bauteil gefertigt wird. Beispielsweise können die beiden Teile des Formelements beabstandet zueinander angeordnet sein, so dass sie die Seiten des Bauteils formen, zwischen denen die Seitenkante des Bauteils liegt. Der Zwischenraum kann durch entsprechende Abstandshalter zwischen den beiden Teilen des ersten Formelements fixiert werden. Die Abstandshalter sind vorzugsweise außerhalb des Bereichs, in dem das Bauteil hergestellt wird, angeordnet.

Die Abstandshalter können auch durch einen weiteren aufblasbaren Schlauch gebildet sein oder durch einen solchen aufblasbaren Schlauch unterstützt werden. Wenn auch dieser weitere aufblasbare Schlauch mit der umgebenden Atmosphäre fluidisch gekoppelt ist, bläst sich der Schlauch in dem Zwischenraum der beiden Teile des Formelements auf. Dadurch werden die beiden Teile des Formelements gleichmäßig mit Druck beaufschlagt und somit gleichmäßig auseinandergehalten. Ein solcher aufblasbarer Schlauch kann auch zwischen zwei Formelementen als Abstandshalter dienen, wobei jedes der Formelemente ein anderes Bauteil oder einen ganz anderen Abschnitt des herzustellenden Bauteils formt.

Ferner kann das zweite Formelement auf beiden Teilen des ersten Formelements aufliegen. Mit anderen Worten überspannt das zweite Formelement die beiden Teile des ersten Formelements. Der Hohlraum des zweiten Formelements korrespondiert dabei mit dem Zwischenraum zwischen den beiden Teilen des ersten Formelements. Zumindest geht der Zwischenraum in den Hohlraum über. Beispielsweise kann der Hohlraum eine größere Breite aufweisen, als der den Zwischenraum definierenden Abstand der beiden Teile des ersten Formelements.

Die Vorrichtung erlaubt somit die Herstellung eines Bauteils, insbesondere eines Bauteils mit Stirnseite, wobei die Vorrichtung keine (steifen oder fixierten) Formelemente aufweist. Der Hohlraum und Zwischenraum der beiden Formelemente erlaubt ein Einbringen von Verstärkungsfasern oder eines Pre-pregs, ohne dass die Fasern belastet werden (bspw. gestaucht werden). Dies erlaubt zudem die Herstellung eines Bauteils, ohne dass anschließend Nacharbeiten notwendig sind. Mit anderen Worten können Bauteile direkt mit der gewünschten Form hergestellt werden, also sogenannte "near net shape"-Bauteile.

Gemäß einem weiteren Aspekt umfasst ein Verfahren zum Herstellen eines Bauteils, das eine äußere Stirnseite und zwei daran angrenzende Seitenflächen aufweist, wobei die Stirnseite eine kleinere Fläche aufweist als die zwei Seitenflächen, die folgenden Schritte:
- Anordnen eines ersten Formelements, das eine Form aufweist, die zumindest einem Abschnitt des herzustellenden Bauteils mit Ausnahme einer äußeren Stirnseite des herzustellenden Bauteils entspricht;
- Anordnen eines zweiten, einen Hohlraum aufweisenden Formelements auf dem ersten Formelement, so dass der Hohlraum die an den Abschnitt des herzustellenden Bauteils angrenzende, äußere Stirnseite des herzustellenden Bauteils überspannt;
- Einbringen eines aufblasbaren Schlauchs in den Hohlraum;
- Einbringen eines vorgefertigten Bauteils und/oder eines auszuhärtenden Materials in das erste Formelement;
- Abdecken des ersten Formelements und des zweiten Formelements mit einer Abdeckung, die das erste Formelement und das zweite Formelement gegenüber der umgebenden Atmosphäre abdichtet;
- Aufbringen eines Vakuums in dem von der Abdeckung abgedichteten Bereich, in dem sich das erste Formelement und das zweite Formelement befinden,
- wobei das Innere des aufblasbaren Schlauchs mit der umgebenden Atmosphäre fluidisch gekoppelt ist, sodass der Schlauch sich beim Aufbringen des Vakuums ausdehnt und ein die äußere Stirnseite des herzustellenden Bauteils formendes Formelement bildet.

Dabei ist die Reihenfolge der Schritte des Anordnens und Einbringens irrelevant und diese Schritte können in jeder beliebigen Reihenfolge erfolgen. Beispielsweise kann das Einbringen des aufblasbaren Schlauchs in den Hohlraum auch erst nach Einbringen des vorgefertigten Bauteils und/oder des auszuhärtenden Materials erfolgen.

In einer Weiterentwicklung kann das Verfahren auch ein Einbringen einer semi-permeablen Membran zwischen den aufblasbaren Schlauch und der Seite des herzustellenden Bauteils umfassen. Mit anderen Worten kann eine semi-permeable Membran zwischen dem Hohlraum des zweiten Formelements und einem Bereich des ersten Formelements, in dem das herzustellende Bauteil gefertigt wird, eingebracht und angeordnet werden. Auch dieser Schritt kann unabhängig von der oben aufgeführten Reihenfolge der Verfahrensschritte durchgeführt werden. Beispielsweise kann das Einbringen der semi-permeable Membran vor dem Einbringen eines aufblasbaren Schlauchs in den Hohlraum erfolgen.

Die hier beschriebenen Aspekte, Weiterentwicklungen, Ausgestaltungen und Varianten können beliebig kombiniert werden, sodass weitere nicht explizit beschriebene Ausgestaltungsvarianten in der vorliegenden Offenbarung umfasst sind.

Nachfolgend werden Ausführungsbeispiele der Erfindung anhand der Zeichnungen näher beschrieben.
- Figur 1: zeigt schematisch Querschnitte herkömmlich hergestellter Bauteile mit fehlerhafter Stirnseite,
- Figur 2: zeigt schematisch einen Querschnitt einer Vorrichtung zum Herstellen eines eine Stirnseite umfassenden Bauteils,
- Figur 3: zeigt schematisch einen Querschnitt einer Variante einer Vorrichtung zum Herstellen eines eine Stirnseite umfassenden Bauteils, und
- Figur 4: zeigt ein Ablaufdiagramm eines beispielhaften Verfahrens zum Herstellen eines eine Stirnseite umfassenden Bauteils.

Gemäß der vorliegenden Erfindung wird eine Vorrichtung und ein Verfahren zum Herstellen eines eine Stirnseite umfassenden Bauteils beschrieben.

Figur 2 zeigt schematisch einen Querschnitt einer Vorrichtung 10 zum Herstellen eines eine Stirnseite 21 umfassenden Bauteils 20. Die hier in Bezug auf die Stirnseite 21 beschriebenen Anordnungen und Vorgänge können selbstverständlich auch auf eine andere Seite oder einen anderen Abschnitt des herzustellenden Bauteils 20 zutreffen und vorgenommen werden. Das Bauteil 20 wird mit Hilfe eines ersten Formelements 11 und eines zweiten Formelements 13 hergestellt. Dabei kann das erste Formelement 11 einteilig oder mehrteilig (beispielsweise wie dargestellt zweiteilig) ausgestaltet sein. Das erste Formelement 11 weist zumindest eine Seite 12 auf, die einen Abschnitt des herzustellenden Bauteils 20 mit Ausnahme der Stirnseite 21 formt. Das dargestellte erste Formelement 11 dient der Herstellung eines T-förmigen Bauteils 20.

Während die in Figur 2 unten dargestellten Stirnseiten 21 durch das erste Formelement 11 geformt werden, liegt die Stirnseite 21 des herzustellenden Bauteils 20 in einem Bereich, der durch einen Hohlraum 14 des zweiten Formelements 13 bestimmt wird. Mit anderen Worten weist weder das erste Formelement 11 noch das zweite Formelement 13 einen starren Abschnitt auf, der die Stirnseite 21 des herzustellenden Bauteils 20 formt. Vielmehr wird ein aufblasbarer Schlauch 16 in dem Hohlraum 14 vorgesehen, dessen Inneres mit der umgebenden Atmosphäre fluidisch gekoppelt ist.

Eine Abdeckung 18 wird um das erste Formelement 11 und das zweite Formelement 13 angeordnet, bedeckt diese beiden Formelemente 11, 13 und dichtet sie gegenüber der umgebenden Atmosphäre ab. Die Abdeckung 18 kann, wie in Figur 2 dargestellt, auf einem Arbeitstisch (nicht dargestellt) fluiddicht befestigt werden oder kann alternativ die Formelemente 11, 13 vollständig umschließen.

Optional zu dem aufblasbaren Schlauch 16 kann eine semi-permeable Membran 17 vorgesehen sein. Diese kann zwischen dem Schlauch 16 und dem herzustellenden Bauteil 20, insbesondere an dessen herzustellender Stirnseite 21 angeordnet sein. Beispielsweise kann die semi-permeable Membran 17 zumindest abschnittsweise vorgeformt sein, sodass der vorgeformte Abschnitt der Membran 17 die Stirnseite 21 des herzustellenden Bauteils 20 formt.

In der in Figur 2 dargestellten Variante ist die semi-permeable Membran 17 zwischen dem ersten Formelement 11 und dem zweiten Formelement 13 angeordnet und überspannt die Stirnseite 21 des herzustellenden Bauteils 20. Mit anderen Worten überspannt die Membran 17 einen Zwischenraum in dem ersten Formelement 11, in dem das herzustellende Bauteil 20 gefertigt wird.

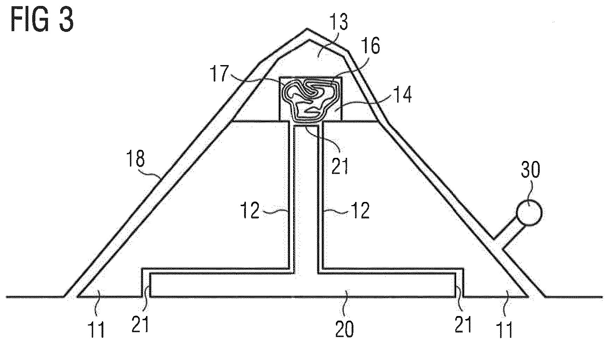

Figur 3 zeigt schematisch einen Querschnitt einer Variante einer Vorrichtung 10 zum Herstellen eines eine Stirnseite 21 umfassenden Bauteils 20. In dieser Variante umschließt die semi-permeable Membran 17 den aufblasbaren Schlauch 16. Hierfür ist die Membran 17 schlauchförmig ausgebildet oder wird auf einer Außenseite des Schlauchs 16 aufgebracht.

Obwohl nur in Figur 2 dargestellt, kann in jeder der beiden Varianten der Vorrichtung 10 ein Dichtelement 19 zwischen dem ersten Formelement 11 und dem zweiten Formelement 13 angeordnet sein. Beispielsweise kann ein Dichtelement 19 zwischen dem ersten Formelement 11 und der semi-permeablen Membran 17 oder zwischen der semi-permeablen Membran 17 und dem zweiten Formelement 13 angeordnet sein.

Eine Vakuumquelle 30 kann so vorgesehen werden, dass ein Vakuum in dem von der Abdeckung 18 abgedichteten Bereich, in dem sich das erste Formelement 11 und das zweite Formelement 13 befinden, aufgebracht wird. Mit anderen Worten wird ein Fluid (Gas oder Flüssigkeit) aus sämtlichen Zwischenräumen und Hohlräumen der ersten und zweiten Formelemente 11, 13 durch die Vakuumquelle 30 entfernt. Vorher oder gleichzeitig kann das Material (bspw. Harz) für die Herstellung des Bauteils 20 in die Zwischenräume und Hohlräume der Formelemente 11, 13 eingebracht werden. Das herzustellende Bauteil 20 kann auch Fasern umfassen, die zuvor insbesondere in die Zwischenräume des ersten Formelements 11 eingelegt werden, beispielsweise in Form eines vorgefertigten Bauteils (Pre-Preg). Die Vakuumquelle 30 entfernt auch zwischen den Fasern enthaltenes Fluid, insbesondere Luft. Das zur Herstellung des Bauteils 20 verwendete Material (Harz) wird hingegen von der semi-permeablen Membran 17 zurückgehalten.

Durch das Aufbringen des Vakuums und die fluidische Kopplung des Inneren des aufblasbaren Schlauchs 16 mit der umgebenden Atmosphäre dehnt sich der Schlauch 16 in dem Hohlraum 14 aus. Dabei drückt der Schlauch 16 aufgrund des Atmosphärendrucks auf das Material des herzustellenden Bauteils 20, insbesondere der auszubildenden/herzustellenden Stirnseite 21, oder auf die optional vorgesehene semi-permeablen Membran 17. Durch die semi-permeablen Membran kann Fluid aus dem Zwischenraum des ersten Formelements 11 zu der Vakuumquelle 30 geführt werden. Zur besseren Abführung des Fluids kann eine Entlüftungsschicht (Breather), der der Übersichtlichkeit halber nicht in den Figuren dargestellt ist, auf der semi-permeablen Membran 17 angeordnet werden. Diese Art der Formung der Stirnseite 21 vermeidet jedoch die Verformung von Fasern in dem herzustellenden Bauteil, die üblicherweise aufgrund eines starren Formelements entstehen. Ferner wird auch der Innenraum der Formelemente begrenzt, sodass sich keine überschüssige Ansammlung von Harz bilden kann, die später entfernt werden müsste.

Dadurch wird die Stirnseite 21 in der Form gebildet, wie sie für das Bauteil 20 vorgesehen ist, ohne das Nacharbeiten notwendig sind (sogenannte "near net shape"-Herstellung). Selbstverständlich können auch die übrigen Stirnseiten 21 des herzustellenden Bauteils 20 und auch die dazwischenliegenden Seiten sowie weitere Elemente des Bauteils 20 durch solch ein zweites Formelement 13 und aufblasbaren Schlauch 16 sowie optional eine Membran 17 geformt werden.

Die in den Figuren dargestellte Form des zweiten Formelements 13 sowie des darin enthaltenen Hohlraums 14 kann je nach herzustellendem Bauteil angepasst sein. So kann der Hohlraum 14 auch nahezu das gesamte Volumen einnehmen, welches in den Figuren durch das zweite Formelement 13 gezeigt ist. Somit ist es ausreichend, wenn das zweite Formelement 13 lediglich aus einer dünnen Schicht stabilen Materials besteht, welches die Abdeckung 18 davon hindert, den aufblasbaren Schlauch 16 zusammenzudrücken, wenn ein Vakuum angelegt wird.

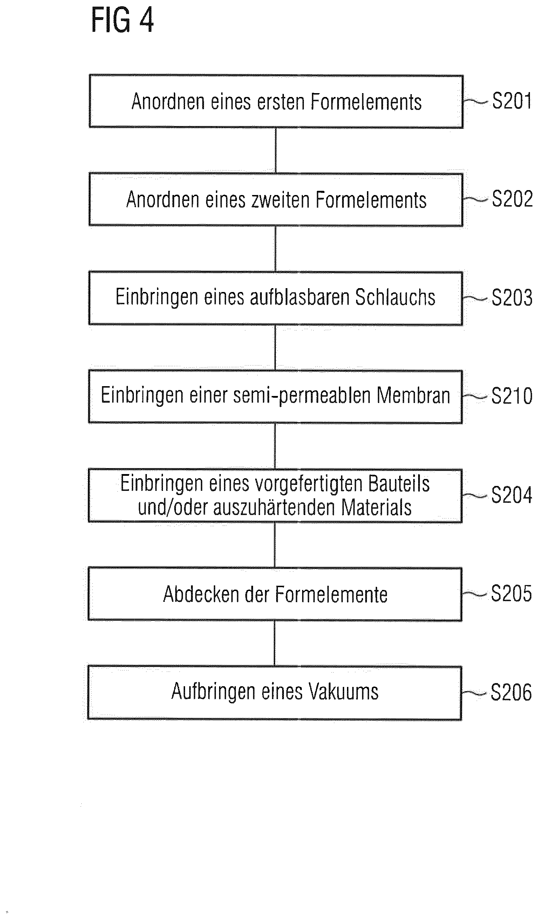

Figur 4 zeigt ein Ablaufdiagramm eines beispielhaften Verfahrens zum Herstellen eines solchen, eine Stirnseite 21 umfassenden Bauteils 20. Zunächst wird in Schritt S201 ein erstes Formelement 11 angeordnet, das eine Form aufweist, die zumindest einem Abschnitt des herzustellenden Bauteils 20 (mit Ausnahme der Stirnseite 21) entspricht. Anschließend wird ein zweites, einen Hohlraum 14 aufweisendes Formelement 13 auf dem ersten Formelement 11 angeordnet (Schritt S202). Der Hohlraum 14 kann dabei mit der Lage der Stirnseite 21 des herzustellenden Bauteils 20 korrespondieren.

Das Verfahren kann ferner ein Einbringen (Schritt S203) eines aufblasbaren Schlauchs 16 in den Hohlraum 14 sowie ein Einbringen (Schritt S204) eines vorgefertigten Bauteils und/oder eines auszuhärtenden Materials in das erste Formelement 11 umfassen. Hierbei ist die Reihenfolge der Schritte S201 bis S204 irrelevant.

In einer optionalen Variante des Verfahrens kann in Schritt S210 eine semi-permeable Membran 17 zwischen dem aufblasbaren Schlauch 16 und der (Stirn-) Seite 21 des herzustellenden Bauteils 20 eingebracht werden. Die Membran 17 wird hierbei zumindest teilweise in dem Hohlraum 14 des zweiten Formelements 13 eingebracht, sodass die Membran 17 einen Zwischenraum des ersten Formelements 11, in dem das Bauteil 20 gefertigt wird, überdeckt. Dabei kann die Membran 17 so ausgestaltet sein, dass sie die Stirnseite 21 des Bauteils 20 in diesem Zwischenraum formt.

Ferner kann das Verfahren ein Abdecken (Schritt S205) des ersten Formelements 11 und des zweiten Formelements 13 mit einer Abdeckung 18 umfassen, die das erste Formelement 11 und das zweite Formelement 13 gegenüber der umgebenden Atmosphäre abdichtet. Anschließend kann in Schritt S206 ein Vakuum in dem von der Abdeckung 18 abgedichteten Bereich, in dem sich das erste Formelement 11 und das zweite Formelement 13 befinden, aufgebracht werden. Das Innere des aufblasbaren Schlauchs 16 ist mit der umgebenden Atmosphäre fluidisch gekoppelt. Dadurch wird bei Aufbringen (S206) des Vakuums der Schlauch 16 ausgedehnt und bildet eine flexible, aber bestimmte Form für die Stirnseite 21 des herzustellenden Bauteils 20.

Die voranstehend erörterten Varianten, Ausgestaltungen und Ausführungsbeispiele dienen lediglich zur Beschreibung der beanspruchten Lehre, schränken diese jedoch nicht auf die Varianten, Ausgestaltungen und Ausführungsbeispiele ein.

## Patentansprüche

1. Vorrichtung (10) zum Herstellen eines Bauteils (20), wobei die Vorrichtung (10) umfasst:
- ein erstes Formelement (11), das an einer Seite (12) dazu ausgebildet ist, zumindest einen Abschnitt des herzustellenden Bauteils (20) mit Ausnahme einer Stirnseite (21) des herzustellenden Bauteils (20) zu formen, wobei die Stirnseite (21) des herzustellenden Bauteils (20) zwischen zwei Seitenflächen des herzustellenden Bauteils (20) angeordnet ist und eine kleinere Fläche aufweist als die zwei an die Stirnseite (21) angrenzenden Seitenflächen des herzustellenden Bauteils (20);
- ein zweites Formelement (13), das einen Hohlraum (14) aufweist, wobei das zweite Formelement (13) dazu eingerichtet ist, auf dem ersten Formelement (11) so angeordnet zu werden, dass der Hohlraum (14) die Stirnseite (21) des herzustellenden Bauteils (20) überspannt und keinen starren Abschnitt zum Formen der Stirnseite (21) aufweist;
- ein aufblasbarer Schlauch (16), der in dem Hohlraum (14) angeordnet ist; und
- eine Abdeckung (18), die das erste Formelement (11) und das zweite Formelement (13) bedeckt und gegenüber der umgebenden Atmosphäre abdichtet,
wobei das Innere des aufblasbaren Schlauchs (16) mit der umgebenden Atmosphäre fluidisch gekoppelt ist, sodass der Schlauch (16) bei einer Ausdehnung des Schlauchs (16) ein die Stirnseite (21) des herzustellenden Bauteils (20) formendes, und außenseitig zu dem herzustellenden Bauteil (20) angeordnetes Formelement bildet.

2. Vorrichtung (10) gemäß Anspruch 1, des Weiteren umfassend:
- eine semi-permeable Membran (17), die zwischen dem aufblasbaren Schlauch (16) und dem herzustellenden Bauteil (20) angeordnet ist.

3. Vorrichtung (10) gemäß Anspruch 2, wobei die semi-permeable Membran (17) zwischen dem ersten Formelement (11) und dem zweiten Formelement (13) angeordnet ist und die Stirnseite (21) des herzustellenden Bauteils (20) überspannt.

4. Vorrichtung (10) gemäß Anspruch 3, des Weiteren umfassend:
- ein Dichtelement (19), das zwischen der semi-permeablen Membran (17) und dem ersten Formelement (11) oder zwischen der semi-permeablen Membran (17) und dem zweiten Formelement (13) angeordnet ist.

5. Vorrichtung (10) gemäß Anspruch 2, wobei die semi-permeable Membran (17) schlauchförmig ausgebildet ist und den aufblasbaren Schlauch (16) umschließt.

6. Vorrichtung (10) gemäß einem der Ansprüche 2 bis 5, wobei die semi-permeable Membran (17) zumindest abschnittsweise vorgeformt ist und der vorgeformte Abschnitt dazu eingerichtet ist, die Stirnseite (21) des herzustellenden Bauteils (20) zu formen.

7. Vorrichtung (10) gemäß einem der Ansprüche 1 bis 6, des Weiteren umfassend:
- eine Vakuumquelle (30) die dazu eingerichtet ist, ein Vakuum in dem von der Abdeckung (18) abgedichteten Bereich, in dem sich das erste Formelement (11) und das zweite Formelement (13) befinden, aufzubringen.

8. Vorrichtung (10) gemäß einem der Ansprüche 1 bis 7, wobei das erste Formelement (11) zweiteilig ausgebildet ist, und wobei das zweite Formelement (13) auf beiden Teilen des ersten Formelements (11) aufliegt.

9. Verfahren zum Herstellen eines Bauteils (20), das eine äußere Stirnseite (21) und zwei daran angrenzende Seitenflächen aufweist, wobei die Stirnseite (21) eine kleinere Fläche aufweist als die zwei Seitenflächen, wobei das Verfahren umfasst:
Anordnen (S201) eines ersten Formelements (11), das eine Form aufweist, die zumindest einem Abschnitt des herzustellenden Bauteils (20) mit Ausnahme der äußeren Stirnseite (21) entspricht;
Anordnen (S202) eines zweiten, einen Hohlraum (14) aufweisenden Formelements (13) auf dem ersten Formelement (11), so dass der Hohlraum (14) die an den Abschnitt des herzustellenden Bauteils (20) angrenzende, äußere Stirnseite (21) des herzustellenden Bauteils (20) überspannt;
Einbringen (S203) eines aufblasbaren Schlauchs (16) in den Hohlraum (14);
Einbringen (S204) eines vorgefertigten Bauteils und/oder eines auszuhärtenden Materials in das erste Formelement (11);
Abdecken (S205) des ersten Formelements (11) und des zweiten Formelements (13) mit einer Abdeckung (18), die das erste Formelement (11) und das zweite Formelement (13) gegenüber der umgebenden Atmosphäre abdichtet;
Aufbringen (S206) eines Vakuums in dem von der Abdeckung (18) abgedichteten Bereich, in dem sich das erste Formelement (11) und das zweite Formelement (13) befinden,
wobei das Innere des aufblasbaren Schlauchs (16) mit der umgebenden Atmosphäre fluidisch gekoppelt ist, sodass der Schlauch (16) sich beim Aufbringen (S206) des Vakuums ausdehnt und ein die äußere Stirnseite (21) des herzustellenden Bauteils (20) formendes Formelement bildet.

10. Verfahren gemäß Anspruch 9, umfassend:
Einbringen (S210) einer semi-permeablen Membran (17) zwischen den aufblasbaren Schlauch (16) und der Stirnseite (21) des herzustellenden Bauteils (20).

## Claims

1. Device (10) for producing a component (20), wherein the device (10) comprises:
- a first mould element (11) which on one side (12) is configured for shaping at least one portion of the component (20) to be produced, with the exception of an end side (21) of the component (20) to be produced; wherein the end side (21) of the component (20) to be produced is disposed between two lateral surfaces of the component (20) to be produced and has a smaller surface than the two lateral surfaces of the component (20) to be produced that are adjacent to the end side (21);
- a second mould element (13) which has a cavity (14), wherein the second mould element (13) is specified to be disposed on the first mould element (11) such that the cavity (14) spans the end side (21) of the component (20) to be produced and does not have any rigid portion for shaping the end side (21);
- an inflatable tube (16) which is disposed in the cavity (14); and
- a cover (18) which covers the first mould element (11) and the second mould element (13) and seals them in relation to the surrounding atmosphere,
wherein the interior of the inflatable tube (16) is fluidically coupled to the surrounding atmosphere in such a way that the tube (16) during expansion of the tube (16) forms a mould element that shapes the end side (21) of the component (20) to be produced and is disposed externally in relation to the component (20) to be produced.

2. Device (10) according to Claim 1, furthermore comprising:
- a semi-permeable membrane (17) which is disposed between the inflatable tube (16) and the component (20) to be produced.

3. Device (10) according to Claim 2, wherein the semi-permeable membrane (17) is disposed between the first mould element (11) and the second mould element (13) and spans the end side (21) of the component (20) to be produced.

4. Device (10) according to Claim 3, furthermore comprising:
- a seal element (19) which is disposed between the semi-permeable membrane (17) and the first mould element (11), or between the semi-permeable membrane (17) and the second mould element (13).

5. Device (10) according to Claim 2, wherein the semi-permeable membrane (17) is configured so as to be tubular and encloses the inflatable tube (16).

6. Device (10) according to one of Claims 2 to 5, wherein the semi-permeable membrane (17) at least in portions is pre-shaped and the pre-shaped portion is specified for shaping the end side (21) of the component (20) to be produced.

7. Device (10) according to one of Claims 1 to 6, furthermore comprising:
- a vacuum source (30) which is specified to apply a vacuum in the region which is sealed by the cover (18) and in which the first mould element (11) and the second mould element (13) are situated.

8. Device (10) according to one of Claims 1 to 7, wherein the first mould element (11) is configured in two parts, and wherein the second mould element (13) bears on both parts of the first mould element (11).

9. Method for producing a component (20) which has an outer end side (21) and two adjacent lateral surfaces, wherein the end side (21) has a smaller surface than the two lateral surfaces, wherein the method comprises the following steps:
disposing (S201) a first mould element (11) which has a shape which corresponds to at least one portion of the component (20) to be produced, with the exception of the outer end side (21);
disposing (S202) a second mould element (13) having a cavity (14) on the first mould element (11) such that the cavity (14) spans that outer end side (21) of the component (20) to be produced that is adjacent to the portion of the component (20) to be produced;
incorporating (S203) an inflatable tube (16) in the cavity (14);
incorporating (S204) a prefabricated component and/or a material to be cured in the first mould element (11);
covering (S205) the first mould element (11) and the second mould element (13) with a cover (18) which seals the first mould element (11) and the second mould element (13) in relation to the surrounding atmosphere;
applying (S206) a vacuum in the region which is sealed by the cover (18) and in which the first mould element (11) and the second mould element (13) are situated,
wherein the interior of the inflatable tube (16) is fluidically coupled to the surrounding atmosphere in such a way that the tube (16) expands during application (S206) of the vacuum and forms a mould element that shapes the outer end side (21) of the component (20) to be produced.

10. Method according to Claim 9, furthermore comprising the step:
incorporating (S210) a semi-permeable membrane (17) between the inflatable tube (16) and the end side (21) of the component (20) to be produced.

## Revendications

1. Dispositif (10) pour fabriquer un composant (20), le dispositif (10) comprenant:
- un premier élément de moule (11), qui est configuré, sur un côté (12), pour former au moins une section du composant (20) à fabriquer, à l'exception d'un côté frontal (21) du composant (20) à fabriquer, le côté frontal (21) du composant (20) à fabriquer étant agencé entre deux surfaces latérales du composant (20) à fabriquer et présentant une surface plus petite que les deux surfaces latérales adjacentes au côté frontal (21) du composant (20) à fabriquer;
- un deuxième élément de moule (13), qui présente une cavité (14), le deuxième élément de moule (13) étant adapté pour être agencé sur le premier élément de moule (11) de telle sorte que la cavité (14) s'étend au-dessus du côté frontal (21) du composant (20) à fabriquer et ne présente aucune section rigide destinée à former le côté frontal (21);
- un tuyau gonflable (16), qui est agencé dans la cavité (14); et
- une couverture (18), qui recouvre le premier élément de moule (11) et le deuxième élément de moule (13) et assure une étanchéité vis-à-vis de l'atmosphère environnante,
l'intérieur du tuyau gonflable (16) étant couplé fluidiquement à l'atmosphère environnante, de telle sorte que, lors d'une expansion du tuyau (16), le tuyau (16) forme un élément de moule formant le côté frontal (21) du composant (20) à fabriquer et agencé à l'extérieur du composant (20) à fabriquer.

2. Dispositif (10) selon la revendication 1, comprenant en outre:
- une membrane semi-perméable (17), qui est agencée entre le tuyau gonflable (16) et le composant (20) à fabriquer.

3. Dispositif (10) selon la revendication 2, dans lequel la membrane semi-perméable (17) est agencée entre le premier élément de moule (11) et le deuxième élément de moule (13) et s'étend au-dessus du côté frontal (21) du composant (20) à fabriquer.

4. Dispositif (10) selon la revendication 3, comprenant en outre:
- un élément d'étanchéité (19), qui est agencé entre la membrane semi-perméable (17) et le premier élément de moule (11) ou entre la membrane semi-perméable (17) et le deuxième élément de moule (13).

5. Dispositif (10) selon la revendication 2, dans lequel la membrane semi-perméable (17) est réalisée sous forme de tuyau et entoure le tuyau gonflable (16).

6. Dispositif (10) selon l'une quelconque des revendications 2 à 5, dans lequel la membrane semi-perméable (17) est préformée au moins par sections et la section préformée est adaptée pour former le côté frontal (21) du composant (20) à fabriquer.

7. Dispositif (10) selon l'une quelconque des revendications 1 à 6, comprenant en outre:
- une source de vide (30) qui est adaptée pour appliquer un vide dans la zone étanchéifiée par la couverture (18), dans laquelle se trouvent le premier élément de moule (11) et le deuxième élément de moule (13).

8. Dispositif (10) selon l'une quelconque des revendications 1 à 7, dans lequel le premier élément de moule (11) est réalisé en deux parties et dans lequel le deuxième élément de moule (13) repose sur les deux parties du premier élément de moule (11).

9. Procédé de fabrication d'un composant (20), qui présente un côté frontal extérieur (21) et deux surfaces latérales adjacentes à celui-ci, le côté frontal (21) présentant une surface plus petite que les deux surfaces latérales, le procédé comprenant:
l'agencement (S201) d'un premier élément de moule (11), qui présente une forme correspondant au moins à une section du composant (20) à fabriquer, à l'exception du côté frontal extérieur (21);
l'agencement (S202) d'un deuxième élément de moule (13), présentant une cavité (14), sur le premier élément de moule (11), de telle sorte que la cavité (14) s'étende au-dessus du côté frontal extérieur (21) du composant (20) à fabriquer, adjacent à la section du composant (20) à fabriquer;
l'insertion (S203) d'un tuyau gonflable (16) dans la cavité (14);
l'insertion (S204) d'un composant préfabriqué et/ou d'un matériau à durcir dans le premier élément de moule (11);
le recouvrement (S205) du premier élément de moule (11) et du deuxième élément de moule (13) avec une couverture (18), laquelle assure l'étanchéité du premier élément de moule (11) et du deuxième élément de moule (13) vis-à-vis de l'atmosphère environnante;
l'application (S206) d'un vide dans la zone étanchéifiée par la couverture (18), dans laquelle se trouvent le premier élément de moule (11) et le deuxième élément de moule (13);
l'intérieur du tuyau gonflable (16) étant couplé fluidiquement à l'atmosphère environnante, de telle sorte que, lors de l'application (S206) du vide, le tuyau (16) se dilate et forme un élément de moule formant le côté frontal extérieur (21) du composant (20) à fabriquer.

10. Procédé selon la revendication 9, comprenant:
l'insertion (S210) d'une membrane semi-perméable (17) entre le tuyau gonflable (16) et le côté frontal (21) du composant (20) à fabriquer.
